# EUROPÄISCHE PATENTSCHRIFT

(11) **EP 1 100 306 B1**
(45) Veröffentlichungstag und Bekanntmachung des Hinweises auf die Patenterteilung: **16.04.2003**
(21) Anmeldenummer: 00931032.7
(22) Anmeldetag: 24.05.2000
(51) Int. Cl.: A01G 23/00

(54) **METHODE ZUR BEHANDLUNG VON WEIHNACHTSBÄUMEN, UM DAS WACHSEN IHRER JAHRESTRIEBE ZU REGULIEREN UND ZANGE ZUM GEBRAUCH HIERFÜR**
METHOD FOR TREATING CHRISTMAS TREES, IN ORDER TO REGULATE THE GROWTH OF ANNUAL SHOOTS AND SECATEURS USED FOR THE METHOD
METHODE POUR TRAITER DES ARBRES DE NOEL AFIN DE REGULER LA CROISSANCE DE LEURS POUSSES ANNUELLES ET SECATEUR UTILISE POUR Y PARVENIR

(30) Priorität: 26.05.1999 DK 990732
(43) Veröffentlichungstag der Anmeldung: 23.05.2001
(73) Patentinhaber: Geil, Lars, 8680 Ry (DK)
(72) Erfinder: Geil, Lars, 8680 Ry (DK)
(86) Internationale Anmeldenummer: DK0000277
(87) Internationale Veröffentlichungsnummer: WO00072660

(56) Entgegenhaltungen:
- EP-A1- 0 954 968

## Beschreibung

Die vorliegende Erfindung betrifft ein Verfahren zur Behandlung von Weihnachtsbäumen, um das Wachsen ihrer Jahrestriebe zu regulieren und eine Zange, die für dieses Verfahren verwendet wird.

Seit vielen Jahren kennt man das Problem mit langen Jahrestrieben. In den letzten 4-6 Jahren hat man in der Weihnachtsbaumbranche versucht, dieses Problem mit Hilfe von verschiedenen chemischen Methoden zu lösen, indem man wachstumregulierende Chemikalien auf die Triebe spritzt.

Die Methode ist jedoch mit gewissen Nachteilen verbunden, teils aufgrund der Umweltbeeinflussung, aber auch weil Weihnachtsbäume sehr ungleich ausschlagen, wodurch sich die chemische Behandlung sich über einen längeren Zeitraum erstreckt.

Der Zweck der vorliegenden Erfindung ist, diese Nachteile mittels der bekannten Technik zu beheben.

Die Erfindung ist also in Übereinstimmung mit einer Methode, die in der Einleitung erwähnt wurde, bei der es das Eigentümliche ist, daß die Weihnachtsbäume eine passende Anzahl Schnitte in der Rinde des Jahrestriebs erhalten und dadurch den Zustrom von Saft begrenzen.

Die Behandlung einer ganzen Kultur kann auf dieses Weise in einem gesamten Arbeitsablauf geschehen - so daß diese nicht mehr als einmal geschehen muß.

Die Methode kann mit einem gewöhnlichen Messer vorgenommen werden, es ist aber vorzuziehen, daß eine zu diesem Zweck entwickelte Zange verwendet wird, da diese die Eigenart besitzt, daß sie eine Stellschraube zum Einstellen des Zusammendrückens sowie zwei Backen mit flacher Gegenhalterung hat, und auf jeder dieser ist, im Verhältnis zu einander versetzt, ist ein scharfes konkaves Messer montiert.

Die Verwendung dieser Zange, anstatt eines gewöhnlichen Messers, hat den Vorteil, daß gleichzeitig zwei versetzte Schnitte auf jeder Seite des Jahrestriebes gemacht werden. Ein anderer Vorteil ist, daß bei jedem Baum das Zusammendrücken, und damit die Tiefe der Schnitte, individuell im Verhältnis zur Dicke des Jahrestriebes, eingestellt werden kann.

Die flachen Gegenhalterungen gewährleisten, daß die Triebe nicht zerquetscht werden, wenn die Backen der Zange um den Baum zusammengedrückt werden. Die Gegenhalterungen sind vorzugsweise aus plan geschliffenem Aluminium hergestellt. Auf den Gegenhalterungen sitzen die Messer versetzt, um ein Ringeln vermeiden, bei dem der Zustrom von Saft ganz unterbrochen werden kann.

In den letzten beiden Jahren wurden Versuche durchgeführt, die teils die Anwendbarkeit der Methode zeigt, und teils, daß an den Bäumen keine Schäden durch diese Art der wachstumregulierenden Behandlung entstehen.

Die Erfindung wird nachstehend, mit Hinweis auf die Abbildungen, näher erklärt.

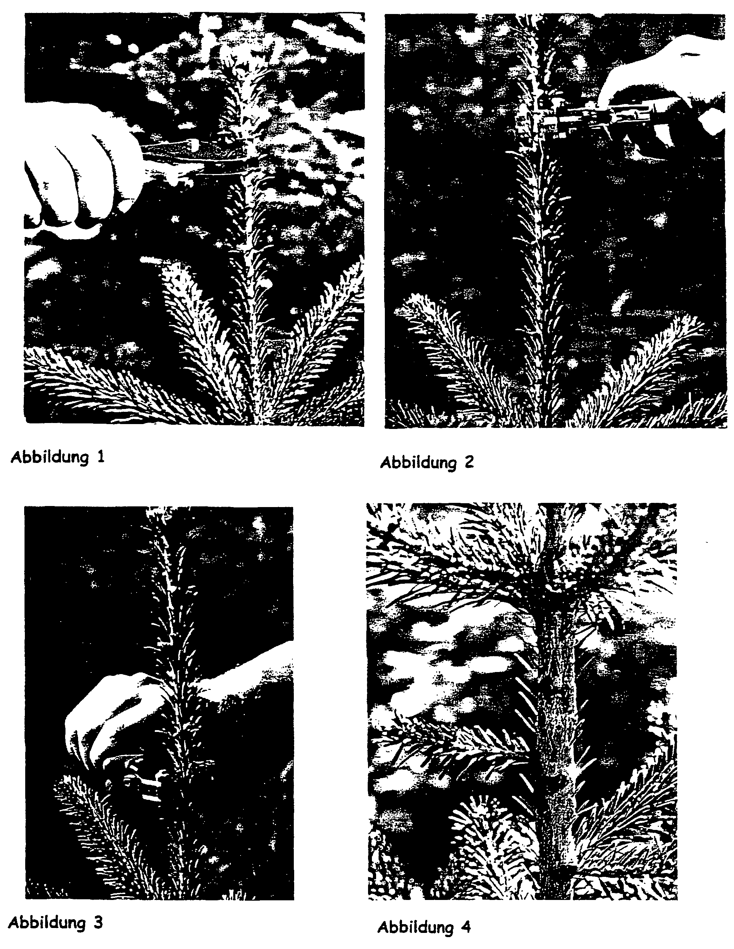

Abbildung 1 zeigt, wie der erste Schnitt so nahe wie möglich an der Spitze angebracht wird.

Abbildung 2 zeigt den selben Schnitt, von einem anderen Winkel aus gesehen.

Abbildung 3 zeigt einen anderen Schnitt. Der Schnitt ist 90 Grad im Verhältnis zum ersten Schnitt versetzt und liegt ca. 10 cm weiter unten am Jahrestrieb. Wenn sich am Trieb viele Internodien befinden, dann kann es erforderlich sein, daß der Schnitt mehr als 10 cm versetzt wird.

Abbildung 4 zeigt einen Baum, der 1998 behandelt worden ist. Hier sieht man, wie an den Schnittverletzungen die Rinde zusammengewachsen ist.

## Patentansprüche

1. Die Methode zur Behandlung von Weihnachtsbäumen, die das Wachstum der Jahrestriebe regulieren soll, ist **dadurch gekennzeichnet, daß** in der Rinde der Jahrestriebe eine passende Anzahl Schnitte angebracht wird, um dadurch den Zustrom von Saft zu begrenzen.

2. Die Zange zur Ausübung der Methode laut Anspruch 1, besitzt die Eigenart, daß diese eine Stellschraube zur Einstellung des Zusammendrückens und zwei Backen mit flachen Gegenhalterungen besitzt, und daß auf jeder dieser, im Verhältnis zur anderen versetzt, ein scharfes konkaves Messer angebracht ist.

## Claims

1. The procedure for the treatment of Christmas trees with the purpose of regulating the growth of leaders is **characterised by** an adequate number of cuts being applied to the bark of the leaders in order to limit the flow of juice.

2. The tongs to be used during the performance of the procedure according to demand no. 1 are **characterised by** a diameter screw for the adjustment of the compression and two jaws with flat dollies each featuring staggered sharp concave knives.

## Revendications

1. Mode de traitement des arbres de Noël en vue de réguler la croissance en hauteur, **caractérisé par** la pratique d'un certain nombre d'entailles dons l'écorce des branches hautes dans le but de limiter la circulation de la sève.

2. Pince destinée à ce traitement aux termes du critère 1, **caractérisée par** ce qu'elle a une vis tranversale servant à réguler la compression et deux mâchoires à surface plane, avec une lame concave aiguisée montée sur chacune d'elles en léger décalage l'une par rapport à l'autre.
